# DEMANDE DE BREVET EUROPEEN

(11) **EP 1 273 388 A1**
(43) Date de publication de la demande: **08.01.2003**
(21) Numéro de dépôt: 02356127.7
(22) Date de dépôt: 04.07.2002
(51) Int. Cl.: B23Q 3/154, B29C 33/32, B29C 45/17

(54) **Ensemble pour la fixation magnétique de moules sur des machines à injecter**

(30) Priorité: 05.07.2001 FR 0108961
(71) Demandeur: Walker Braillon Magnetics, 73800 Sainte Helene du Lac (FR)
(72) Inventeur: Doyelle, Pierre, 73800 Montmelian (FR)
(74) Mandataire: Bratel, Gérard

(57) **Abrégé**

Ensemble pour la fixation de moules par attraction magnétique sur des machines à injecter le caoutchouc ou les élastomères, cet ensemble (2) incluant un plateau magnétique (3) du type «électro-permanent», avec des aimants permanents (10) entourés par des bobinages électriques (12), plus particulièment avec une pluralité de pôles magnétiques comportant chacun un ou plusieurs aimants permanents (10) recouverts par une pièce polaire (11) et entourés d'un bobinage (12) formé de spires de câble métallique (13) avec isolation, le bobinage (12) étant lui-même enrobé dans une matière de blocage (14), et ledit ensemble (2) incluant aussi une cale magnétique (4) recevant des éléments chauffants (17), dans son épaisseur caractérisé en ce que ladite, cale magnétique recevant les éléments chauffants (17), est une cale magnétique chauffante (4) située, par rapport au plateau magnétique (3) proprement dit, du côté (5) prévu pour recevoir les moules (20) à fixer, la cale magnétique (4) étant réalisée avec des zones (15) conductrices du flux magnétique situées en correspondance avec les pôles magnétiques (10,11) du plateau (3), et avec des entrefers (16) situés en correspondance avec les bobinages (12) du plateau (3).

Ensemble pour la fixation de moules sur des machines à injecter, selon la revendication 1, caractérisé en ce que les éléments chauffants (17) sont implantés dans les entrefers (16) de la cale magnétique (4).

## Description

La présente invention concerne un ensemble pour la fixation de moules sur des machines à injecter, notamment des machines d'injection pour caoutchouc ou élastomères. Plus particulièrement encore, cette invention se rapporte à un ensemble qui assure le bridage des moules sur les machines à injecter, par des moyens magnétiques.

L'exploitation des presses à injecter nécessite un bridage des moules sur les parties fixe et mobile de ces machines. Traditionnellement, le bridage des moules est mécanique. Une autre solution connue consiste en l'utilisation de plateaux magnétiques, avec un premier plateau magnétique monté sur la plaque fixe de la presse pour la fixation d'une moitié du moule, et un second plateau magnétique monté sur la plaque mobile de la presse pour la fixation de l'autre moitié du moule, complémentaire de la première. Ces plateaux magnétiques comportent des aimants permanents, pilotés par des bobines électriques reliées à un groupe électronique de commande. L'envoi d'impulsions de courant électrique dans les bobines assure la magnétisation et la démagnétisation des aimants permanents, aucun courant électrique n'étant nécessaire pour maintenir ces aimants à l'état magnétisé. Dans cet état, les aimants assurent la fixation des moitiés de moule par attraction magnétique, jusqu'à ce qu'ils soient démagnétisés par le groupe électronique de commande. Ainsi, on dispose de plateaux magnétiques de type « électro-permanent » qui assurent une fixation forte et sûre des moules sur les presses, d'une façon économique, en permettant un bridage rapide et un changement rapide et aisé des moules, même de grandes dimensions, sans nécessiter de modification des moules traditionnels.

Dans les réalisations pratiques actuelles de tels plateaux magnétiques, en particulier celles déjà commercialisées par le Demandeur sous la dénomination « EPM », les pôles avec aimants permanents et bobines sont disposés en « rosace » dans le cas des plateaux de relativement petites dimensions, et comportent une disposition en « pôles parallèles » pour les plateaux de plus grandes dimensions. Les deux types de plateaux magnétiques, à savoir « rosace » et « pôles parallèles », sont construits selon le même principe :
Ces plateaux comportent une semelle en acier doux, un cadre ou « squelette » oxycoupé, des aimants du type ALNICO répartis en groupes d'aimants, des pôles en acier doux placés en correspondance avec les groupes d'aimants, et, autour de chaque groupe d'aimants, une bobine électrique en fils émaillés.

Les aimants du type ALNICO conservent leurs performances avec l'élévation de la température, et les pôles en acier doux homogénéisent et concentrent le flux magnétique issu de ces aimants. La bobine en fils émaillés, associée à chaque groupe d'aimants, est alimentée en courant redressé par le groupe électronique de commande, pour opérer la magnétisation et la démagnétisation des aimants. Les temps d'alimentation en courant de chaque bobine sont de l'ordre de 0,8 seconde, car les surfaces d'aimants et de pôles favorisent les courants de Foucault, qu'il convient d'éviter (une technique antérieure, qui consistait à envoyer dans les bobines des décharges de condensateurs de très faible durée, de l'ordre de 5 millisecondes, créait des courants antagonistes forts empêchant la saturation des aimants).

Dans ces plateaux magnétiques existants, les fils émaillés et les isolants des bobines sont de classe « H », résistant à une température de 180°C. La résine de blocage, du genre « ARALDITE » (marque enregistrée), résiste à une température de 140° C. Ces plateaux sont donc proposés pour une utilisation jusqu'à une température de 120° C, ce qui couvre entièrement les besoins de l'injection des matières plastiques courantes qui nécessite, d'une manière générale, une température de moule de l'ordre de 80° à 90° C.

Il n'en est pas de même pour l'injection du caoutchouc, pour laquelle le moule doit être maintenu en permanence à une température nettement plus élevée, de l'ordre de 200° à 220° C. A ces températures, l'apport calorifique assuré par la seule matière injectée dans le moule n'est pas suffisant pour compenser les déperditions de chaleur ; il est donc nécessaire de chauffer les moules et de les maintenir en température.

A cet effet, la technique actuelle consiste à garnir le plateau de presse d'un isolant thermique, sur lequel est placé un plateau magnétique chauffant à cartouches chauffantes électriques, qui reçoit lui-même la moitié de moule correspondante, bridée mécaniquement. Ainsi, cette moitié de moule est chauffée et maintenue en température.

Pour que cette moitié de moule soit maintenue à une température de l'ordre de 200° à 220°C, il est nécessaire que la température au niveau du plateau chauffant soit d'au moins 220° à 240°C. En l'état actuel de la technique, il n'existe pratiquement pas de plateaux magnétiques permettant la fixation de moules maintenus à de telles températures, les plateaux existants (dont les caractéristiques ont été rappelées ci-dessus) étant notablement insuffisants.

Or, la demande de plateaux magnétiques capables de maintenir les moules d'injection de caoutchouc, ou d'autres moules analogues utilisés à des températures élevées, est particulièrement forte car le démontage d'un moule chaud, ou le montage d'un moule préchauffé, ne sont pas des opérations aisées dans le cas d'un bridage mécanique.

Pour tenter de satisfaire ce besoin , il a déjà été proposé un plateau magnétique du type « électro-permanent », pour la fixation de moules sur des machines à injecter, ce plateau magnétique comportant une partie recevant des éléments chauffants et, sur un côté de cette partie recevant les éléments chauffants, une pluralité de pôles magnétiques comportant chacun un ou plusieurs aimants recouverts par une pièce polaire, et entourés d'un bobinage formé de spires de câble métallique avec isolation à base de verre et de silicone, le bobinage étant lui-même enrobé dans une matière de blocage telle que résine « haute température » ou ciment réfractaire. En particulier, la partie recevant les éléments chauffants est ici une semelle chauffante en acier doux, pourvue d'alésages recevant des cartouches chauffantes, qui est située du côté opposé à la fixation des moules. Un cadre en matière ferromagnétique peut être appliqué et fixé contre une face de la semelle, pour délimiter une pluralité d'ouvertures correspondant aux pôles magnétiques du plateau, dont la disposition est, de préférence, du type « pôles parallèles ». Une telle réalisation est décrite dans la demande de brevet FR 2 794 053 A, au nom du Demandeur, ou dans son équivalent européen EP 1 057 583 A.

Une autre réalisation de plateau magnétique chauffant, assez comparable à la précédente, est divulguée par le document EP 0 919 324 A, ou le document correspondant US 5966062 A.

Dans de tels plateaux magnétiques avec semelle chauffante, la chaleur produite par les cartouches chauffantes doit être transmise au moule, situé du côté opposé à la semelle chauffante, en traversant toute l'épaisseur du plateau et, en particulier, en traversant les aimants et les bobinages avec leur matière de blocage. Or les bobinages et leur matière de blocage interviennent pratiquement comme des isolants, du point de vue thermique, tandis que les aimants sont de mauvais conducteurs de la chaleur (environ 4,6 fois moins conducteurs que l'acier doux).

Ainsi, les plateaux magnétiques ici considérés possèdent une bonne tenue de leurs bobinages à la chaleur, et ils assurent une parfaite adhérence des moules sur ces plateaux, mais le transfert de chaleur entre la semelle chauffante de ces plateaux et les moules rencontre un obstacle et reste insuffisant, ou du moins d'un rendement peu satisfaisant, alors qu'un but essentiel est ici de chauffer les moules et de les maintenir en température.

La présente invention vise à remédier à ces inconvénients, donc à parfaire le transfert de chaleur entre le plateau magnétique et le moule attiré par ce plateau, de manière à améliorer l'efficacité globale de tels plateaux magnétiques.

A cet effet, la présente invention a pour objet un ensemble pour la fixation par attraction magnétique de moules sur des machines à injecter le caoutchouc ou les élastomères, cet ensemble incluant un plateau magnétique du type « électro-permanent », avec des aimants permanents entourés par des bobinages électriques, plus particulièrement avec une pluralité de pôles magnétiques comportant chacun un ou plusieurs aimants permanents recouverts par une pièce polaire et entourés d'un bobinage formé de spires de câble métallique avec isolation, le bobinage étant lui-même enrobé dans une matière de blocage, et ledit ensemble incluant aussi une partie recevant des éléments chauffants, cet ensemble étant caractérisé par le fait que ladite partie, recevant les éléments chauffants, est une cale magnétique chauffante située, par rapport au plateau magnétique proprement dit, du côté prévu pour recevoir les moules à fixer, la cale magnétique étant réalisée avec des zones conductrices du flux magnétique situées en correspondance avec les pôles magnétiques du plateau, et avec des entrefers situés en correspondance avec les bobinages du plateau, ladite cale magnétique recevant, dans son épaisseur, les éléments chauffants.

Dans une forme de réalisation préférée de l'invention, les éléments chauffants sont implantés dans les entrefers de la cale magnétique.

Ainsi, l'invention propose d'interposer, entre le plateau magnétique électro-permanent et le moule à fixer, une cale magnétique chauffante qui est située au plus près du moule, et qui assure aussi la conduction du flux magnétique, en reprenant le dessin de la face polaire du plateau magnétique. Il en résulte que le flux magnétique issu du plateau magnétique passera, sans rencontrer de résistance, au travers des parties magnétiquement conductrices de la cale magnétique chauffante, jusqu'à atteindre le moule à attirer, tandis que le flux thermique, sortant des éléments chauffants de la même cale magnétique, est émis du côté le plus proche de l'endroit où il est utile, c'est-à-dire du côté du moule à chauffer, et sans que ce flux thermique doive traverser des composants tels que les aimants et les bobinages avec leur matière de blocage, qui feraient obstacle à son passage. De cette manière, l'invention apporte une solution technique optimale au double problème de la transmission des flux magnétiques et calorifiques vers les moules fixés sur les plateaux.

L'invention sera mieux comprise à l'aide de la description qui suit, en référence au dessin schématique annexé représentant, à titre d'exemple, une forme de réalisation de cet ensemble pour la fixation magnétique de moules sur des machines à injecter :

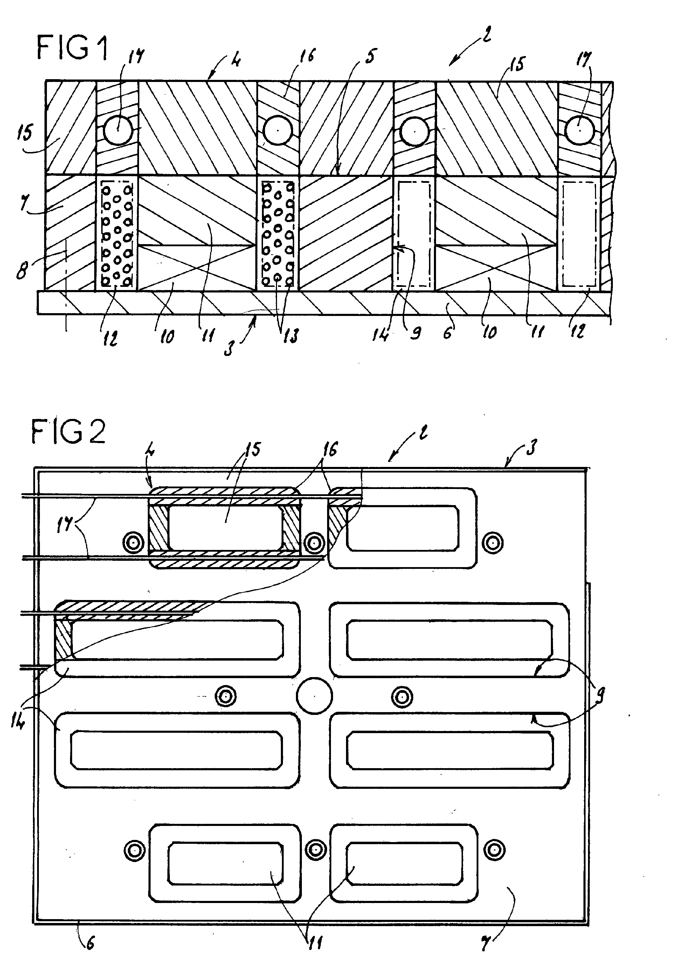

Figure 1 est une vue partielle, en coupe transversale, d'un ensemble conforme à la présente invention ;
Figure 2 est une vue de face, avec parties arrachées, de l'ensemble de figure 1 ;
Figure 3 est un schéma illustrant l'utilisation d'un tel ensemble, en relation avec un moule à fixer.

L'ensemble pour la fixation de moules, désigné globalement par la référence 2, inclut d'une part un plateau magnétique électro-permanent 3, et d'autre part une cale magnétique chauffante 4 située, par rapport au plateau magnétique 3, du côté (face 5 du plateau 3) prévu pour recevoir un moule à fixer.

Le plateau magnétique 3 possède une semelle 6 en acier doux, de relativement faible épaisseur. Sur une grande face de la semelle 6 est appliqué un cadre 7 en matière ferromagnétique, fixé à la semelle 6 au moyen de vis 8. Le cadre 7 délimite une pluralité d'ouvertures 9 de forme générale rectangulaire, plus ou moins allongée, qui correspondent aux pôles magnétiques du plateau 3 dont la disposition est ici du type « pôles parallèles ».

Chaque pôle magnétique comporte un groupe d'aimants permanents 10, par exemple du type ALNICO (alliage de fer, aluminium, nickel et cobalt), qui conservent leurs propriétés magnétiques jusqu'à une température de l'ordre de 400° C. Les aimants 10 sont, d'un côté, appliqués contre la semelle 6 et, du côté opposé, recouverts par une pièce polaire 11 en acier doux, affleurant la surface extérieure du cadre 7.

Pour chaque pôle magnétique, l'ensemble formé par les aimants 10 et par la pièce polaire 11 est entouré d'un bobinage électrique 12, formé de spires de câble en cuivre 13 avec isolation à base de verre et de silicone. Plus particulièrement, il peut s'agir d'un câble dont l'âme en cuivre est entourée de guipages de verre imprégnés de silicone, eux-mêmes recouverts d'une tresse de verre siliconée, tel que le câble produit par la Société OMERIN, et disponible sous la dénomination commerciale « SILICABLE VS ». Un tel câble 13 résiste à des températures de l'ordre de 280° C à 350° C.

Le bobinage électrique 12, ainsi constitué, est enrobé dans une matière de blocage 14 en résine « haute température » ou en ciment réfractaire, qui le fixe dans l'ouverture 9 correspondante du cadre 7.

La cale magnétique chauffante 4, qui recouvre le plateau magnétique 3 sur sa face 5 opposée à la semelle 6, est réalisée avec des zones 15 conductrices du flux magnétique, en particulier en acier doux, qui reproduisent le motif formé par les pôles magnétiques du plateau 3, constitués par les aimants 10 et les pièces polaires 11, et aussi par les pôles « de retour » résultant du cadre 7. La cale magnétique 4 possède aussi des entrefers 16, notamment en laiton et/ou en acier inoxydable amagnétique, qui sont situés en correspondance avec les bobinages 12 du plateau magnétique 3.

Cette cale magnétique 4 reçoit des cannes chauffantes 17, disposées parallèlement les unes aux autres dans des alésages appropriés, qui traversent longitudinalement les entrefers 16.

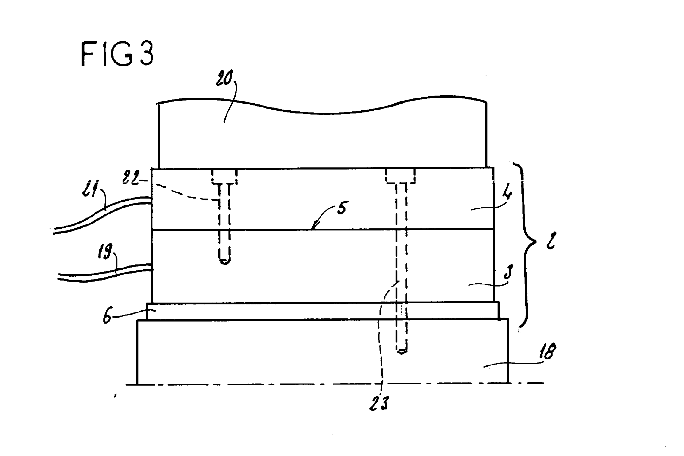

Comme l'illustre la figure 3, l'ensemble 2 précédemment décrit est monté, pour son utilisation, sur un plateau 18 fixe ou mobile d'une presse à injecter, le plateau magnétique 3 de l'ensemble 2 étant situé au plus près du plateau de presse 18, et la cale magnétique chauffante 4 étant éloignée du plateau de presse 18. Le plateau magnétique 3 est relié à un groupe électronique de commande extérieur, non représenté, par un câble électrique 19.

Comme le montre aussi cette figure 3, la cale magnétique chauffante 4 est fixée sur le plateau magnétique 3 par des vis 22, et l'ensemble 2 (plateau 3 et cale 4) est fixé sur le plateau de presse 18 par d'autres vis 23 (une seule vis 22 et une seule vis 23 étant ici indiquées, pour la clarté du dessin).

Pour la magnétisation des aimants 10 du plateau magnétique 3, on envoie dans les bobinages 12, à partir du groupe électronique de commande, précité, des trains d'impulsions électriques successives, toutes redressées dans le même sens. Par exemple, un train de dix impulsions de même sens, la durée totale de ce train d'impulsions étant de 0,1 seconde, convient pour magnétiser complètement les aimants 10, et permettre ainsi à l'ensemble 2 de retenir fermement une moitié de moule 20, par attraction magnétique, le flux magnétique issu du plateau 3 étant conduit au travers des zones 15 de la cale magnétique 4 jusqu'à la moitié de moule 20 à attirer.

Pour démagnétiser les mêmes aimants 10, en vue de libérer la moitié de moule 20, il est avantageux d'envoyer dans les bobinages 12 des trains successifs d'impulsions de courant électrique, qui comprennent chacun des impulsions successives de même signe, en faisant alterner des trains d'impulsions toutes positives et des trains d'impulsions toutes négatives, les intensités des trains d'impulsions étant décroissantes dans le temps, depuis le premier train d'impulsions jusqu'au dernier train d'impulsions. Chacun des trains d'impulsions, ici de sens alternés et dégressifs, peut lui-même comporter dix impulsions et posséder une durée de 0,1 seconde, une opération de démagnétisation complète pouvant durer environ 20 secondes.

Lorsque la moitié de moule 20 est fixée par attraction magnétique sur l'ensemble 2, l'alimentation électrique (par un autre câble électrique 21) des cannes chauffantes 17 de la cale magnétique 4 dégage de la chaleur, qui est également conduite par cette cale magnétique 4 vers la moitié de moule 20 fixée.

Ainsi, la cale magnétique chauffante 4 reprend les polarités de la structure de base du plateau magnétique 3, pour attirer la moitié de moule 20 à fixer, tout en chauffant très directement cette moitié de moule 20, pour l'amener à la température requise et la maintenir à cette température, lors de son utilisation dans la presse à injecter.

L'on ne s'éloignerait pas du cadre de l'invention, telle que définie dans les revendications annexées :
- en modifiant le nombre, la forme et la disposition des pôles magnétiques du plateau magnétique, et la configuration correspondante de la cale magnétique chauffante ;
- en ayant recours à tous matériaux équivalents de ceux mentionnés ;
- en remplaçant les cannes chauffantes de la cale magnétique par d'autres moyens de chauffage ;
- en utilisant d'autres procédures de magnétisation et de démagnétisation que celles indiquées ;
- en destinant cet ensemble non seulement aux presses à injecter le caoutchouc, mais encore à des machines pour l'injection d'autres matières analogues, telles que les élastomères, nécessitant elles aussi un maintien des moules à des températures élevées.

## Revendications

1. Ensemble pour la fixation de moules par attraction magnétique sur des machines à injecter le caoutchouc ou les élastomères, cet ensemble (2) incluant un plateau magnétique (3) du type « électro-permanent », avec des aimants permanents (10) entourés par des bobinages électriques (12), plus particulièrement avec une pluralité de pôles magnétiques comportant chacun un ou plusieurs aimants permanents (10) recouverts par une pièce polaire (11) et entourés d'un bobinage (12) formé de spires de câble métallique (13) avec isolation, le bobinage (12) étant lui-même enrobé dans une matière de blocage (14), et ledit ensemble (2) incluant aussi une partie (4) recevant des éléments chauffants (17), **caractérisé en ce que** ladite partie, recevant les éléments chauffants (17), est une cale magnétique chauffante (4) située, par rapport au plateau magnétique (3) proprement dit, du côté (5) prévu pour recevoir les moules (20) à fixer, la cale magnétique (4) étant réalisée avec des zones (15) conductrices du flux magnétique situées en correspondance avec les pôles magnétiques (10, 11) du plateau (3), et avec des entrefers (16) situés en correspondance avec les bobinages (12) du plateau (3), ladite cale magnétique (4) recevant, dans son épaisseur, les éléments chauffants (17).

2. Ensemble pour la fixation de moules sur des machines à injecter, selon la revendication 1, **caractérisé en ce que** les éléments chauffants (17) sont implantés dans les entrefers (16) de la cale magnétique (4).
